# EUROPEAN PATENT SPECIFICATION

(11) **EP 2 257 775 B1**
(45) Date of publication and mention of the grant of the patent: **27.02.2019**
(21) Application number: 09719570.5
(22) Date of filing: 27.02.2009
(51) Int. Cl.: G01F 23/296

(54) **VIBRATING ELEMENT APPARATUS**
GERÄT MIT VIBRATIONSELEMENT
APPAREIL À ÉLÉMENT VIBRANT

(30) Priority: 01.03.2008 GB 0803900
(43) Date of publication of application: 08.12.2010
(73) Proprietor: Rosemount Measurement Limited, Slough Berkshire SL1 4UE (GB)
(72) Inventor: TURNER, Roy, Colin, Maidenhead, Berkshire SL6 8DH (GB)
(74) Representative: Vleck, Jan Montagu
(86) International application number: PCT/US2009/001246
(87) International publication number: WO 2009/114073

(56) References cited:
- EP-A- 2 031 359
- WO-A-01/95667
- GB-A- 2 150 292
- GB-A- 2 351 805
- US-A1- 2003 010 114

## Description

### Field of the Invention

This invention relates to a novel form of vibrating element apparatus and has been devised, in particular, to provide a vibrating fork-type fluid level transducer for use in environments which are, or could be, subject to temperatures which may be substantially constant for long periods of time, and which can be within a wide range. However, it will be appreciated by those skilled in the art, that the invention could also be applied to vibrating element apparatus configured to measure density and/or viscosity.

### Background to the Invention

Various forms of apparatus including one or more vibrating elements are well known in the field of plant or process control, one example being a contact fluid level transducer. A typical contact fluid transducer includes a pair of spaced tines mounted on a diaphragm, the diaphragm in turn defining one end of a hollow cylindrical body. The tines are arranged to vibrate at a given frequency, typically their resonant frequency, and vibration is typically effected by displacing the centre of the diaphragm by means of a compressed stack of piezoelectric elements, located within the hollow body, and driven by a cycling voltage. When the vibrating tines are contacted by a fluid, there is a change in the frequency at which they vibrate. By detecting the change in frequency, one can determine when a rising fluid level contacts the tines. Likewise one can detect when a fluid level drops below the level of the tines.

An early example of this type of contact level transducer is described in UK Patent No. 2 150 292. In this device a stack of piezoelectric elements is compressed against the inner or reverse side of a diaphragm by a compression screw mounted in a bridge piece extending over that end of the stack remote from the diaphragm. The spaced tines extend from the outer or front side of the diaphragm, which diaphragm forms one end of a hollow body in which the piezoelectric stack is located. The bridge piece is, in turn, mounted on a pair of spaced rod-shaped supports extending from the inner side of the diaphragm and also located within the hollow body.

When the piezoelectric stack is subjected to a cyclic drive voltage, the same expands and contracts between the compression screw and the diaphragm, deforming the diaphragm and causing the tines to vibrate.

It will be appreciated that, in the device just described, the diaphragm must be relatively robust if it is to provide a mounting point for the rod shaped supports. This requirement runs counter to a general requirement that the diaphragm be relatively thin and thus require a minimum of energy to be applied to the piezoelectric elements in order to establish vibration of the tines.

A form of device which addresses this latter requirement is shown in published International Patent Application No. WO 01/95667. In this device the piezoelectric stack is compressed against the inner surface of the diaphragm by a plug. The plug has a screw thread on its periphery which engages a corresponding screw thread provided on the inner surface of the hollow body. By rotating the plug relative to the hollow body, the compression on the piezoelectric stack can be established and, if necessary, adjusted. This arrangement performs perfectly well when the instrument is operating at a substantially constant temperature. However, if the instrument is subjected to a significant change in temperature, the wall section, to which the diaphragm and plug are attached, will react to the change in temperature to a far greater extent than the components housed within the instrument, particularly the piezoelectric stack. More particularly, if the environment is subjected to a significant rise in temperature, the wall section will expand. This will cause the compressive force applied to the piezoelectric stack to be reduced, possibly to the extent that the instrument no longer functions. If, on the other hand, the temperature of the environment significantly lowers, the wall section will contract. This will increase the compressive force applied to the piezoelectric stack and may damage the piezoelectric elements by crushing, or may overstress the components providing the compression.

It is an object of the present invention to address the above mentioned problems; or to provide a method and/or apparatus applicable to a vibrating element device, which will at least provide a novel and useful choice.

### Summary of the Invention

Accordingly, in one aspect, the invention provides a method of forming a vibrating element apparatus, said apparatus including:
a wall section having an inner surface and an outer surface;
a diaphragm defining, and closing one end of, said wall section, said diaphragm having an inner surface and an outer surface, the inner surfaces of said wall section and said diaphragm defining a hollow body;
one or more vibrating elements extending from the outer surface of said diaphragm;
a stack comprised of components which include one or more piezoelectric elements, said stack being positioned within said hollow body; and
a compression device operable to compress said stack against the inner surface of said diaphragm;
said method being characterised in that it includes associating at least one thermal compensation element with said stack, said thermal compensation element being selected and sized such that, when said apparatus is subjected to an increase in temperature, said at least one thermal compensation element expands to ensure a substantially constant force is maintained on the components comprising said stack so as to allow the apparatus to operate at temperatures between about - 70°C and about + 260°C.

Preferably said method includes at least partly positioning said stack within said hollow body by means of said at least one thermal compensation element.

Preferably said method includes providing a thermal compensation element at each end of said stack.

Preferably said method includes establishing the size(s) of said thermal expansion element(s) so that the rate of expansion of said stack including said thermal expansion element(s) substantially corresponds to the rate of expansion of a support structure directly supporting said stack within said apparatus.

In a second aspect, the invention provides a vibrating element apparatus, said apparatus including:
a wall section having an inner surface and an outer surface;
a diaphragm defining, and closing one end of, said wall section, said diaphragm having an inner surface and an outer surface, the inner surfaces of said wall section and said diaphragm defining a hollow body;
one or more vibrating elements extending from the outer surface of said diaphragm;
a stack comprised of components which include one or more piezoelectric elements, said stack being located within said hollow body; and
a compression device operable to compress said stack against the inner surface of said diaphragm;
said apparatus being characterised in that it includes at least one thermal compensation element associated with said stack, said thermal compensation element being selected and sized to ensure that, when said apparatus is subjected to an increase in temperature, a substantially constant force is maintained on the components comprising said stack so as to allow the apparatus to operate at temperatures between about - 70°C and about + 260°C.

Preferably said at least one thermal compensation element is further operable to position said stack within said hollow body.

Preferably a thermal compensation element is located between said stack and said diaphragm, and between said stack and said compression device.

Preferably said thermal compensation elements are sized and configured so that, in use, the stack including said thermal compensation elements expands and/or contracts at substantially the same rate as a support structure directly supporting said stack within said apparatus.

Preferably said support structure comprises a cage located within said hollow body. Alternatively said support structure could be provided, in part, by said wall section.

Preferably said thermal compensation elements are formed from aluminium-based material.

Preferably said one or more vibrating elements comprise a pair of tines.

Many variations in the way the invention may be performed will present themselves to those skilled in the art, upon reading the following description. The description should not be regarded as limiting but rather as an illustration, only, of one manner of performing the invention. Where appropriate any element or component should be taken as including any or all equivalents thereof whether or not specifically mentioned.

### Brief Description of the Drawings

One method of, and apparatus for, reducing the present invention to practice will now be described with reference to the accompanying drawings in which:
- Figure 1:: shows a diagrammatic cross-section through a vibrating element apparatus according to the invention in the form of a contact level transducer, with certain components omitted for clarity;
- Figure 2:: shows an isometric view of a cage incorporated in the apparatus shown in Figure 1;
- Figure 3:: shows an isometric view of an assembly or stack incorporated in the apparatus shown in Figure 1;
- Figure 4:: shows an isometric view of one-half of a carrier for supporting the assembly or stack shown in Figure 3, within the apparatus shown in Figure1;
- Figure 5:: shows an isometric view of the assembly or stack shown in Figure 3 located within the component shown in Figure 4; and
- Figure 6:: shows an isometric view of a complete assembly formed by engaging a cover component with that which is shown in Figure 5.

### Detailed Description of Working Embodiment

This invention provides a novel form of vibrating element apparatus which, in the case of the embodiment herein described, comprises a tuning fork-type liquid level detection transducer 10; and a method of forming the same. It will be appreciated, however, that a similarly configured device could be used to measure density and/or viscosity.

In the known manner the apparatus 10 includes a diaphragm 11 integrally formed with, and closing one end of, a cylindrical wall section 12. The diaphragm has an inner surface 14 and an outer surface 15. A pair of tines 17 extend from the outer surface 15.

The wall section 12 has an inner surface 18 and an outer surface 19. The inner surface 14 of the diaphragm and the inner surface 18 of the wall section combine to define a hollow body 20.

Located in the hollow body 20 are one or more piezoelectric elements which, in combination with spacers, insulators, connectors and the like comprise an assembly or stack 22 which is held in compression against the inner surface 14 of the diaphragm by means of a compression device, preferably a compression screw 24. To the extent described thus far, the apparatus is entirely conventional. By applying a cycling voltage to the piezoelectric elements the diaphragm 11 is caused to cyclically deform and, in turn, cause the tines 17 to vibrate.

Though not essential to the implementation of the invention, as described herein the stack 22 is located within a cage 25 and the compression screw 24 is threadably mounted at that end of the cage 25 remote from the diaphragm 11. It can be seen that the cage 25 is located within the hollow body 20 but inwardly of the inner surface 18 of the wall section 12 and is fixed to the inner surface 18 adjacent to the junction between the diaphragm 11 and the wall section 12. As a result, axial expansion or contraction of the wall section 12, when subjected to rapid temperature changes, will not cause the compression on the piezoelectric stack 22 to vary to the extent that the apparatus ceases to function - either because the compression is reduced to a degree which does not allow the tines to vibrate; or increased to a level which crushes and destroys the piezoelectric elements, or over-stresses the compression components to such an extent that, when the temperature again rises, the compression components no longer apply the required compression force on the stack 22.

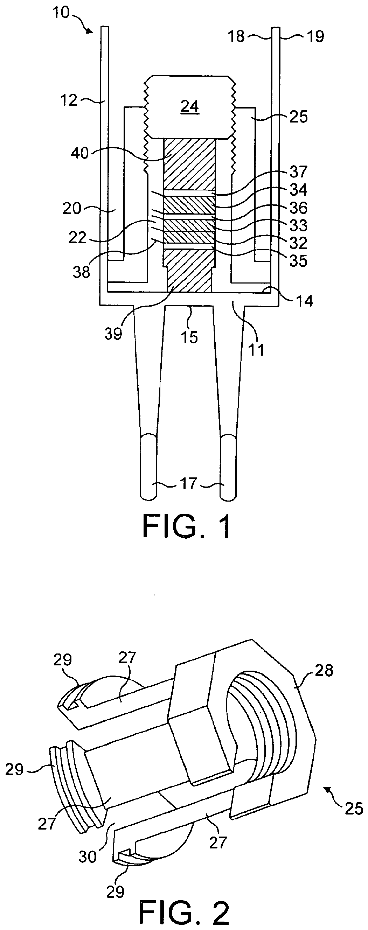

Referring now to Figure 2, the cage 25 is defined by a plurality of legs 27 extending from one side of a common collar 28. Located at the free end of each leg 27 is a fixing surface part 29, by means of which the cage is fixed to the inner surface 18 of the wall section 12. It will be noted that the cage 25 shown in Figure 2 is provided with a slot 30 extending the entire length thereof, the purpose of which will be described in detail below.

A fuller description of the cage 25, and the manner in which the cage is assembled into the hollow body 20, can be found in our co-pending PCT Patent Publication No WO2009110988

In the form shown the stack 22 comprises piezoelectric elements 32, 33 and 34, insulating discs 35, 36 and 37, and a plurality of conducting connectors 38 to carry electrical signals to and from the piezoelectric elements.

In accordance with one aspect of the invention, the stack 22 has associated therewith at least one thermal compensating element which, when subjected to the same temperature gradient, selectively expands or contracts to a greater extent than the components in the stack. If, as shown in WO 01/95667, the stack 22 is compressed between a compression screw mounted directly in the outer wall section 12, and the diaphragm 11, the thermal compensation element(s) will compensate for axial expansion of the outer wall section 12. However if, as shown in the drawings appended hereto, the stack 22 is mounted within cage 25, then the thermal compensating element(s) will compensate for any axial expansion of the cage 25. Whichever of the alternative support structures for the stack is chosen, the provision of the thermal compensation element(s) ensures that the compression applied to the stack 22 remains substantially constant, at least to an extent which allows the apparatus to remain operating at temperatures between about - 70°C and about + 260°C.

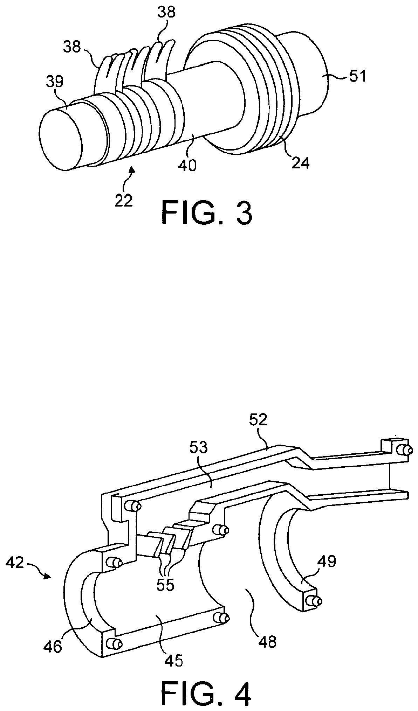

As shown in Figures 1 and 3 it is convenient to provide two thermal compensating elements 39 and 40, one at either end of the stack 22. The elements 39 and 40 preferably comprise plugs of aluminium alloy, plug 39 serving to mount the stack 22 against the diaphragm 11 whilst the plug 40 serves to mount the stack 22 in relation to the compression screw 24. It will be appreciated, by those skilled in the art, that the thermal compensating elements could be formed in a variety of alternative materials including plastics such as PEEK (polyetheretherketone). The sizing of the respective plugs can be established empirically according to the material from which they are made, the expansion/contraction characteristics of the stack components, the arrangement and materials composition of the stack support structure, and the temperature range the apparatus is expected to accommodate.

According to another aspect of the embodiment shown in the drawings, the stack and, if appropriate the thermal compensating elements, are held in a sub-assembly or module enabling ready assembly of the apparatus at time of manufacture, and ready replacement of the stack components, in a single step and as a single unit, in the event of failure when in service.

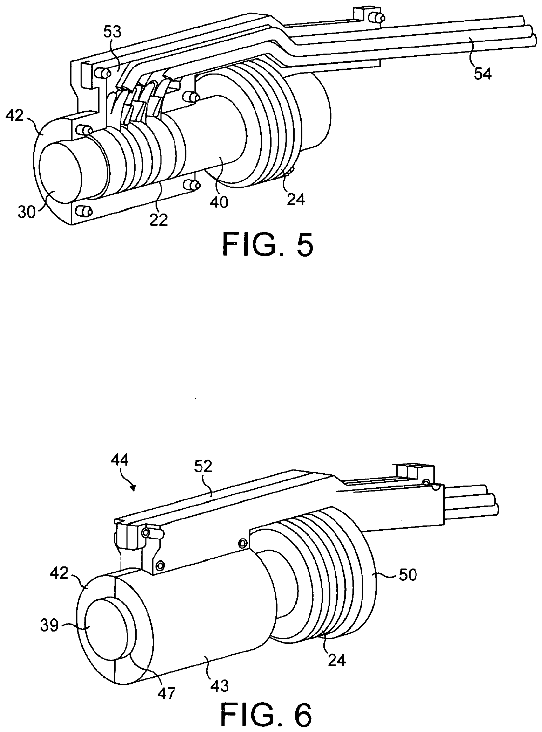

As can be seen, the stack is preferably mounted into a carrier, the completed form of which is shown at 44 in Figure 6. As is clearer from Figures 4 & 5, the carrier 44 is provided in two halves, one half 42 being shown in Figures 4 & 5, the remaining half 43 being shown in Figure 6. The halves 42 and 43 are substantial mirror images of one another.

Referring to Figure 4, the carrier half 42 includes a first cavity 45 to receive the stack 22 and temperature compensating components 39 & 40, the cavity 45 terminating at one end in a collar 46 which, when the carrier halves 42 & 43 are combined, defines a lower aperture 47 through which the lower thermal compensating element 39 projects. Behind the cavity 45 a space 48 is provided in which the compression screw 24 is received, the space 48 being sized so as to loosely receive the screw 24 but allow the screw to rotate relative to the carrier 44. The distal edge of space 48 is defined by a web 49 which combines with a like member on carrier half 43 to define a collar 50 about a spigot 51 projecting from the compression screw 24.

It will also be noted from Figures 4 to 6 that the carrier 44 includes a spine 52 extending along one edge thereof. As can be seen in Figures 4 & 5 defined within the interior of spine 52 is a channel 53 which receives wires 54 fixed to connectors 38, which wires 54 connect the piezoelectric elements 32, 33 & 34 to the transducer electronics (not shown). Vanes 55 are preferably formed on the inner surfaces to separate the individual wires 54 where they are fixed to connectors 38, thereby avoiding short-circuiting.

At assembly, the wires 54 are first fixed to connectors 38. The stack 22, temperature compensating components 39 & 40, and compression screw 24 are then laid in the carrier half 42 and the wires 54 located in channel 53. Thereafter the carrier half 43 is brought into position and engaged with the half 42 to define the sub-assembly 44.

Upon assembly of the apparatus the sub-assembly 44 is offered up to cage 25 and the spine 52 is aligned with the slot 30. The sub-assembly 44 is then passed axially down into cage 25 until the threaded outer surface of compression screw 24 can be engaged with the threaded inner surface of collar 28. The compression screw is then tightened within the cage 25 using a tool appropriate for the turning arrangement provided on the end face of spigot 51. By way of example, this could be an Allen key, socket or screw driver.

It will be appreciated that invention, at least in the case of the working embodiment described herein, provides a predetermined level detection transducer which, at least in the case of the embodiment just described, can not only accommodate relatively quick temperature changes without performance being adversely affected, but can also operate for extended periods at markedly different operating temperatures whilst displaying acceptable operating performance.

## Claims

1. A method of forming a vibrating element apparatus (10), said apparatus including:
a wall section (12) having an inner surface (18) and an outer surface (19);
a diaphragm (11) defining, and closing one end of, said wall section, said diaphragm having an inner surface (14) and an outer surface (15), the inner surfaces of said wall section and said diaphragm defining a hollow body (20); one or more vibrating elements (17) extending from the outer surface (15) of said diaphragm (11);
a stack (22) comprised of components which include one or more piezoelectric elements (32, 33, 34), said stack being positioned within said hollow body (20); and a compression device (24) operable to compress said stack (22) against the inner surface (14) of said diaphragm;
said method being **characterised in that** it includes associating at least one thermal compensation element (39, 40) with said stack, said thermal compensation element being selected and sized such that, when said apparatus is subjected to an increase in temperature, said at least one thermal compensation element (39, 40) expands at a greater rate than the components comprising said stack to ensure a substantially constant force is maintained on the components comprising said stack (22) so as to allow the apparatus to operate at temperatures between about - 70°C and about + 260°C.

2. A method as claimed in claim 1 includes at least partly positioning said stack (22) within said hollow body (20) by means of said at least one thermal compensation element (39, 40).

3. A method as claimed in claim 1 or claim 2 including providing a thermal compensating (39, 40) element at each end of said stack (22).

4. A method as claimed in any one of claims 1 to 3 including establishing the size(s) of said thermal expansion element(s) (39, 40) so that the rate of expansion of said stack (22) including said thermal expansion element(s) substantially corresponds to the rate of expansion of a support structure (25) directly supporting said stack within said apparatus (10).

5. A vibrating element apparatus (10), said apparatus including:
a wall section (12) having an inner surface (18) and an outer surface (19);
a diaphragm (11) defining, and closing one end of, said wall section, said diaphragm having an inner surface (14) and an outer surface (15), the inner surfaces of said wall section and said diaphragm defining a hollow body (20);
one or more vibrating elements (17) extending from the outer surface (15) of said diaphragm;
a stack (22) comprised of components which include one or more piezoelectric elements (32, 33, 34), said stack being located within said hollow body; and
a compression device (24) operable to compress said stack (22) against the inner surface (14) of said diaphragm (11);
said apparatus being **characterised in that** it includes at least one thermal compensation element (39, 40) associated with said stack, said thermal compensation element, when subjected to an increase in temperature, expanding at a greater rate than the components comprising said stack (22), and **in that** said thermal compensation element is shaped and sized such that when said apparatus is subjected to an increase in temperature, a substantially constant force is maintained on the components comprising said stack (22) so as to allow the apparatus to operate at temperatures between about - 70°C and about + 260°C.

6. Apparatus as claimed in claim 5 wherein said at least one thermal compensation element (39, 40) is further operable to at least partly position said stack (22) within said hollow body (20).

7. Apparatus as claimed in claim 5 or claim 6 wherein a thermal compensation element (39) is located between said stack (22) and said diaphragm (11), and (40) between said stack and said compression device (24).

8. Apparatus as claimed in any one of claims 5 to 7 wherein said thermal compensation elements (39, 40) are sized and configured so that, in use, the stack including said thermal compensation elements expands and/or contracts at substantially the same rate as a support structure (25) directly supporting said stack (22) within said apparatus.

9. Apparatus as claimed in claim 8 wherein said support structure (25) comprises a cage located within said hollow body (20).

10. Apparatus as claimed in claim 8 wherein said support structure is provided, in part, by said wall section (20).

11. Apparatus as claimed in any one of claims 4 to 10 wherein said thermal compensation elements (39, 40) are formed from aluminium-based material.

12. Apparatus as claimed in any one of claims 4 to 11 wherein said one or more vibrating elements comprise a pair of tines (17).

## Patentansprüche

1. Verfahren zum Bilden eines Geräts (10) mit Vibrationselement, wobei das genannte Gerät Folgendes umfasst:
einen Wandabschnitt (12) mit einer Innenfläche (18) und einer Außenfläche (19);
eine Membran (11), die den genannten Wandabschnitt definiert und ein Ende davon verschließt, wobei die genannte Membran eine Innenfläche (14) und eine Außenfläche (15) hat, wobei die Innenflächen des genannten Wandabschnitts und die genannte Membran einen Hohlkörper (20) definieren;
ein oder mehrere Vibrationselemente (17), die sich von der Außenfläche (15) der genannten Membran (11) erstrecken;
einen Stapel (22), bestehend aus Komponenten, die ein oder mehrere piezoelektrische Elemente (32, 33, 34) beinhalten, wobei der genannte Stapel in dem genannten Hohlkörper (20) positioniert ist; und eine Kompressionsvorrichtung (24) mit der Aufgabe, den genannten Stapel (22) gegen die Innenfläche (14) der genannten Membran zu komprimieren;
wobei das genannte Verfahren **dadurch gekennzeichnet ist, dass** es das Assoziieren von wenigstens einem Wärmeausgleichselement (39, 40) mit dem genannten Stapel beinhaltet, wobei das genannte Wärmeausgleichselement so gewählt und bemessen ist, dass, wenn der genannte Gerät einer Temperaturerhöhung ausgesetzt wird, das genannte wenigstens eine Wärmeausgleichselement (39, 40) sich mit einer höheren Geschwindigkeit ausdehnt als die Komponenten, die den genannten Stapel umfassen, um zu gewährleisten, dass eine im Wesentlichen konstante Kraft an den Komponenten beibehalten wird, die den genannten Stapel (22) umfassen, um es zuzulassen, dass das Gerät bei Temperaturen zwischen etwa -70°C und etwa +260°C arbeitet.

2. Verfahren nach Anspruch 1, das wenigstens das teilweise Positionieren des genannten Stapels (22) in dem genannten Hohlkörper (20) mittels des genannten wenigstens einen Wärmeausgleichselements (39, 40) beinhaltet.

3. Verfahren nach Anspruch 1 oder Anspruch 2, das das Bereitstellen eines Wärmeausgleichselements (39, 40) an jedem Ende des genannten Stapels (22) beinhaltet.

4. Verfahren nach einem der Ansprüche 1 bis 3 einschließlich des Festlegens der Größe(n) des/der genannten Wärmeausdehnungselements/e (39, 40), so dass die Ausdehnungsrate des genannten Stapels (22) einschließlich des/der genannten Wärmeausdehnungselements/e im Wesentlichen der Ausdehnungsrate einer Auflagestruktur (25) entspricht, die den genannten Stapel in dem genannten Gerät (10) direkt abstützt.

5. Gerät (10) mit Vibrationselement, wobei das genannte Gerät Folgendes umfasst:
einen Wandabschnitt (12) mit einer Innenfläche (18) und einer Außenfläche (19);
eine Membran (11), die den genannten Wandabschnitt definiert und ein Ende davon verschließt, wobei die genannte Membran eine Innenfläche (14) und eine Außenfläche (15) hat, wobei die Innenflächen des genannten Wandabschnitts und der genannten Membran einen Hohlkörper (20) definieren;
ein oder mehrere Vibrationselemente (17), die sich von der Außenfläche (15) der genannten Membran (11) erstrecken;
einen Stapel (22), der aus Komponenten zusammengesetzt ist, die ein oder mehrere piezoelektrische Elemente (32, 33, 34) beinhalten, wobei sich der genannte Stapel in dem genannten Hohlkörper befindet; und
eine Kompressionsvorrichtung (24) mit der Aufgabe, den genannten Stapel (22) gegen die Innenfläche (14) der genannten Membran (11) zu komprimieren;
wobei das genannte Gerät **dadurch gekennzeichnet ist, dass** es wenigstens ein mit dem genannten Stapel assoziiertes Wärmeausgleichselement (39, 40) aufweist, wobei sich das genannte Wärmeausgleichselement, wenn es einer Temperaturerhöhung ausgesetzt wird, mit einer höheren Geschwindigkeit ausdehnt als die Komponenten, die den genannten Stapel (22) umfassen, und dadurch, dass das genannte Wärmeausgleichselement so geformt und bemessen ist, dass, wenn das genannte Gerät einer Temperaturerhöhung ausgesetzt wird, eine im Wesentlichen konstante Kraft an den Komponenten beibehalten wird, die den genannten Stapel (22) umfassen, um es zuzulassen, dass das Gerät bei Temperaturen zwischen etwa -70°C und etwa +260°C arbeitet.

6. Gerät nach Anspruch 5, wobei das genannte wenigstens eine Wärmeausgleichselement (39, 40) ferner die Aufgabe hat, den genannten Stapel (22) wenigstens teilweise in dem genannten Hohlkörper (20) zu positionieren.

7. Gerät nach Anspruch 5 oder Anspruch 6, wobei sich ein Wärmeausgleichselement (39) zwischen dem genannten Stapel (22) und der genannten Membran (11) und (40) zwischen dem genannten Stapel und der genannten Kompressionsvorrichtung (24) befindet.

8. Gerät nach einem der Ansprüche 5 bis 7, wobei die genannten Wärmeausgleichselemente (39, 40) so bemessen und konfiguriert sind, dass sich beim Gebrauch der Stapel einschließlich der genannten Wärmeausgleichselemente im Wesentlichen mit derselben Geschwindigkeit ausdehnt und/oder zusammenzieht wie eine Auflagestruktur (25), die den genannten Stapel (22) in dem genannten Gerät direkt abstützt.

9. Gerät nach Anspruch 8, wobei die genannte Auflagestruktur (25) einen Käfig umfasst, der sich in dem genannten Hohlkörper (20) befindet.

10. Gerät nach Anspruch 8, wobei die genannte Auflagestruktur teilweise durch den genannten Wandabschnitt (22) bereitgestellt wird.

11. Gerät nach einem der Ansprüche 4 bis 10, wobei die genannten Wärmeausgleichselemente (39, 40) aus einem Material auf Aluminiumbasis gebildet sind.

12. Gerät nach einem der Ansprüche 4 bis 11, wobei die genannten ein oder mehreren Vibrationselemente ein Paar Zinken (17) umfassen.

## Revendications

1. Procédé de formation d'un appareil à élément vibrant (10), ledit appareil comportant :
une section de paroi (12) présentant une surface interne (18) et une surface externe (19) ;
un diaphragme (11) définissant ladite section de paroi, et fermant une extrémité de celle-ci, ledit diaphragme présentant une surface interne (14) et une surface externe (15), les surfaces internes de ladite section de paroi et dudit diaphragme définissant un corps creux (20) ;
un ou plusieurs éléments vibrants (17) s'étendant depuis la surface externe (15) dudit diaphragme (11) ;
un empilement (22) composé de composants qui comportent un ou plusieurs éléments piézoélectriques (32, 33, 34), ledit empilement étant positionné à l'intérieur dudit corps creux (20) ; et un dispositif de compression (24) servant à compresser ledit empilement (22) contre la surface interne (14) dudit diaphragme ;
ledit procédé étant **caractérisé en ce qu'**il comporte l'association d'au moins un élément de compensation thermique (39, 40) audit empilement, ledit élément de compensation thermique étant sélectionné et dimensionné de telle sorte que, quand ledit appareil est soumis à une hausse de température, ledit au moins un one élément de compensation thermique (39, 40) se détende à un taux supérieur à celui des composants composant ledit empilement pour garantir le maintien d'une force sensiblement constante sur les composants composant ledit empilement (22) afin de permettre à l'appareil de fonctionner à des températures entre environ - 70 °C et environ + 260 °C.

2. Procédé selon la revendication 1 comportant le positionnement au moins partiel dudit empilement (22) à l'intérieur dudit corps creux (20) au moyen dudit au moins un élément de compensation thermique (39, 40).

3. Procédé selon la revendication 1 ou la revendication 2 comportant la fourniture d'un élément de compensation thermique (39, 40) à chaque extrémité dudit empilement (22).

4. Procédé selon l'une quelconque des revendications 1 à 3 comportant l'établissement de la ou des tailles du ou desdits éléments de dilatation thermique (39, 40) de telle sorte que le taux de dilatation dudit empilement (22) comportant le ou lesdits éléments de dilatation thermique corresponde sensiblement au taux de dilatation d'une structure de support (25) qui supporte directement ledit empilement à l'intérieur dudit appareil (10).

5. Appareil à élément vibrant (10), ledit appareil comportant :
une section de paroi (12) présentant une surface interne (18) et une surface externe (19) ;
un diaphragme (11) définissant ladite section de paroi, et fermant une extrémité de celle-ci, ledit diaphragme présentant une surface interne (14) et une surface externe (15), les surfaces internes de ladite section de paroi et dudit diaphragme définissant un corps creux (20);
un ou plusieurs éléments vibrants (17) s'étendant depuis la surface externe (15) dudit diaphragme ;
un empilement (22) composé de composants qui comportent un ou plusieurs éléments piézoélectriques (32, 33, 34), ledit empilement étant positionné dans ledit corps creux ; et
un dispositif de compression (24) servant à compresser ledit empilement (22) contre la surface interne (14) dudit diaphragme (11) ;
ledit appareil étant **caractérisé en ce qu'**il comporte au moins un élément de compensation thermique (39, 40) associé audit empilement, ledit élément de compensation thermique, quand il est soumis à une hausse de température, se dilatant à un taux supérieur à celui des composants composant ledit empilement (22), et **en ce que** ledit élément de compensation thermique est conformé et dimensionné de telle sorte que, quand ledit appareil est soumis à une hausse de température, une force sensiblement constante soit maintenue sur les composants composant ledit empilement (22) afin de permettre à l'appareil de fonctionner à des températures entre environ - 70 °C et environ + 260 °C.

6. Appareil selon la revendication 5 dans lequel ledit au moins un élément de compensation thermique (39, 40) sert en outre à positionner au moins partiellement ledit empilement (22) à l'intérieur dudit corps creux (20).

7. Appareil selon la revendication 5 ou la revendication 6 dans lequel un élément de compensation thermique (39) est situé entre ledit empilement (22) et ledit diaphragme (11), et (40) entre ledit empilement et ledit dispositif de compression (24).

8. Appareil selon l'une quelconque des revendications 5 à 7 dans lequel lesdits éléments de compensation thermique (39, 40) sont dimensionnés et configurés de telle sorte que, durant l'utilisation, l'empilement comportant lesdits éléments de compensation thermique se dilate et/ou se contracte sensiblement au même taux qu'une structure de support (25) qui supporte directement ledit empilement (22) à l'intérieur dudit appareil.

9. Appareil selon la revendication 8 dans lequel ladite structure de support (25) comprend une cage placée à l'intérieur dudit corps creux (20).

10. Appareil selon la revendication 8 dans lequel ladite structure de support est fournie, en partie, par ladite section de paroi (20).

11. Appareil selon l'une quelconque des revendications 4 à 10 dans lequel lesdits éléments de compensation thermique (39, 40) sont formés dans un matériau à base d'aluminium.

12. Appareil selon l'une quelconque des revendications 4 à 11 dans lequel lesdits un ou plusieurs éléments vibrants comprennent une paire de dents (17).
